# EUROPEAN PATENT SPECIFICATION

(11) **EP 4 559 703 B1**
(45) Date of publication and mention of the grant of the patent: **25.11.2026**
(21) Application number: 23929848.2
(22) Date of filing: 25.09.2023
(51) Int. Cl.: B60J 3/02, B60J 3/00, B60R 11/02, B60K 35/22, B60K 35/65

(54) **HUMAN-COMPUTER INTERACTION METHOD AND SYSTEM FOR VEHICLE FRONT PASSENGER SEAT SUN VISOR SCREEN, AND VEHICLE**
MENSCH-COMPUTER-INTERAKTIONSVERFAHREN UND -SYSTEM FÜR SONNENBLENDENSCHIRM EINES VORDEREN FAHRZEUGSITZES UND FAHRZEUG
PROCÉDÉ ET SYSTÈME D'INTERACTION HOMME-MACHINE POUR PALETTE PARE-SOLEIL DE SIÈGE PASSAGER AVANT DE VÉHICULE, ET VÉHICULE

(30) Priority: 29.03.2023 CN 202310317154
(43) Date of publication of application: 28.05.2025
(73) Proprietor: Deepal Automobile Nanjing Research Institute Co., Ltd., Nanjing, Jiangsu 211215 (CN)
(72) Inventor: SU, Zhong, Chongqing 401135 (CN); LUO, Longjing, Chongqing 401135 (CN); TAN, Peng, Chongqing 401135 (CN); ZHAO, Yao, Chongqing 401135 (CN); DENG, Jicheng, Chongqing 401135 (CN)
(74) Representative: 2K Patent Partnerschaft mbB
(86) International application number: PCT/CN2023/120998
(87) International publication number: WO 2024/198274

(56) References cited:
- CN-A- 105 711 385
- CN-A- 110 494 311
- CN-A- 112 298 059
- CN-A- 115 257 564
- CN-A- 116 021 967
- DE-A1- 102018 204 567
- DE-A1- 102018 204 567
- KR-A- 20090 063 508
- KR-U- 970 057 830
- US-A1- 2007 126 255
- US-A1- 2019 258 873
- US-A1- 2023 011 268

## Description

### TECHNICAL FIELD

The present invention relates to the field of vehicle intelligent control technologies, and in particular, to a human-computer interaction method and system for a vehicle front passenger seat sun visor screen, and a vehicle.

### BACKGROUND

With continuous increase in an intelligence degree of automobiles, market requirements for automotive intelligence are becoming more diversified. In this background, requirements of users for in-vehicle display are not limited to that of a driver, but extend to that of a passenger. An in-vehicle display gradually evolves from an original driving assistance tool to a consumer electronic product to meet entertainment requirements of different users.

Currently, a front-passenger-seat sun visor in the automotive industry has an undiversified function, and poor playability in human-computer interaction. Therefore, how to meet entertainment for a front passenger becomes a goal of the front-passenger-seat sun visor, and it is necessary for manufacturers to focus on an ecological experience issue of the front-passenger-seat sun visor.

For example, the patent document CN112572110A discloses a sun visor control method and apparatus, and a vehicle. A solution in which a driver can automatically adjust a sun visor during driving is mentioned in the method. The solution focuses on an automatic sunshade control solution for the sun visor, in which intensity of ambient light and a vehicle head direction are captured by using an external camera for automatically controlling an angle of the sun visor. However, the control solution mentioned in the patent is limited only to resolving a sunshade issue and cannot meet entertainment requirements of a passenger such as viewing comfort.

For another example, the patent document CN112977015A discloses a sunshade structure, a vehicle, and a display control method. The method proposes a design of using a display module to replace an original sun visor, to replace a sunshade function. In addition, the display module can display reserved data information, and is mainly used for telephone number reservation, so that contact information of a vehicle owner can be found quickly during parking. The sunshade display apparatus has only a sunshade function and a function of displaying reservation information such as numbers, and the function of displaying the reservation information faces a person outside a vehicle. The entire sunshade display apparatus has problems of an undiversified function and insufficient automation.

Therefore, it is necessary to develop a human-computer interaction method and system for a vehicle front-passenger-seat sunshade screen, and a vehicle.

CN 105711385 A discloses a sun shield assembly. The sun shield comprises a first surface facing the exterior of a vehicle and a second surface facing the interior of the vehicle. The sun shield assembly comprises an association device, the sun shield and electronic equipment inside the vehicle are associated through the association device, and thus content displayed by the associated electronic equipment can be displayed on the second surface of the sun shield. By means of the sun shield assembly, a driver can directly check navigation information, multimedia information and display information of an instrument panel through the sun shield while using the sun shied to shield sunlight, and thus the driving risk brought when the driver lowers the head to check the content of the electronic equipment is avoided.

US 2007/126255 A1 discloses an antidazzle apparatus for movable bodies. The antidazzle apparatus for movable bodies is capable of not hiding something a user wants to see while dimming sunlight. A transmissive display is disposed above ahead of a driver, and two dimmer portions are formed in the transmissive display. The dimmer portions are positioned on straight lines linking the driver's right and left eyes with the sun, respectively, and are set to sizes a bit larger than the sizes of the pupils. In this case, sunlight is dimmed by the dimmer portions. Nevertheless, lines of sight leading to an entity which is located much closer than the sun is and which the driver wants to see are not intercepted by the dimmer portions. This allows the driver to see the entity.

DE 102018204567 A1 discloses a monitor device for a motor vehicle. The monitor device has a sun visor which can be moved by motor from a folding position to a media position and a monitor which is arranged on the sun visor for displaying digital media. Furthermore, a control unit is provided which is designed to move the sun visor in such a way that, depending on a driving situation which allows media consumption by a driver, a release signal is provided for the automatic movement of the sun visor into the media position.

US 2023/011268 A1 discloses a virtual visor system. The virtual visor system includes a visor having a plurality of independently operable pixels that are selectively operated with a variable opacity. A camera captures images of the face of a driver or other passenger and, based on the captured images, a controller operates the visor to automatically and selectively darken a limited portion thereof to block the sun or other illumination source from striking the eyes of the driver, while leaving the remainder of the visor transparent. The virtual visor system advantageously detects whether the driver of other passenger is performing particular head gestures and updates the optical state of the visor using suitable modified procedures that accommodate the intent or goals of the driver or other passenger that are inferred from the predefined head gesture. In general, the modified procedures reduce distracting or frustrating updates to the optical state of the visor.

US 2019/258873 A1 discloses a shading device. The shading device comprises: a shading member; a display apparatus disposed on a surface of the shading member in such a manner that a display portion faces to an operator; an image pickup device to pick up, as an image, a region which an opposite surface of the surface faces, and generate image pickup data; and a data processing circuit to generate display image data, based on the image pickup data. An image display module comprises: a display apparatus to be disposed on a surface of a shading device in such a manner that a display portion faces an operator; an image pickup device to pick up, as an image, a region to which an opposite surface of the surface faces, and generate image pickup data; and a data processing circuit to generate display image data, based on the image pickup data.

### SUMMARY

An objective of the present invention is to provide a human-computer interaction method and system for a vehicle front-passenger-seat sunshade screen, and a vehicle, to implement adaptive angle adjustment of a screen, to ensure comfort of watching by a user.

The invention is set out in the appended set of claims.

Beneficial effects of the present invention:
(1) The front-passenger-seat sunshade screen, a front passenger seat, and the controller perfectly match with each other, greatly increasing playability of a cabin system. In the present invention, based on eyeball position data captured by the camera and the rotation angle of the front-passenger-seat sunshade screen captured by the angle detection module, the virtual connection line between the eyeball and the camera is always within a preset deviation range from the normal direction of the screen, thereby implementing adaptive angle adjustment of the screen, and ensuring comfort of watching by the user.
(2) The front-passenger-seat sunshade screen replaces a conventional sun visor structure, and a display direction faces a person inside a vehicle, which meets man-machine engineering, has both a sunshade function and a passenger-oriented audio/video entertainment function, and is a new human-computer interaction manner.

### BRIEF DESCRIPTION OF DRAWINGS

FIG. 1 is a flowchart of adjusting a position of a front-passenger-seat sunshade screen based on an eyeball position and angle information of the front-passenger-seat sunshade screen according to an embodiment;
FIG. 2 is a diagram of a principle of adjusting a position of a front-passenger-seat sunshade screen based on an eyeball position and angle information of the front-passenger-seat sunshade screen according to an embodiment;
FIG. 3 is a flowchart of a TV mode of a front-passenger-seat sunshade screen according to an embodiment;
FIG. 4 is a flowchart of a courtesy mode of a front-passenger-seat sunshade screen according to an embodiment;
FIG. 5 is a flowchart of a sunshade mode of a front-passenger-seat sunshade screen according to an embodiment;
FIG. 6 is a block diagram of a principle according to an embodiment;
FIG. 7 is a schematic structural diagram of a connection between the front-passenger-seat sunshade screen and a vehicle front roof crossmember according to an embodiment;
FIG. 8 is a schematic structural diagram of cooperation among the front-passenger-seat sunshade screen, a vehicle front roof crossmember, and a front windshield according to an embodiment;
FIG. 9 is a schematic exploded view of the front-passenger-seat sunshade screen according to an embodiment;
FIG. 10 is a schematic structural diagram of the rotating mechanism according to an embodiment;
FIG. 11 is a schematic diagram of a partial cross-section of the rotating mechanism according to an embodiment;
FIG. 12 is a schematic structural diagram of the right sleeve and a slave pin boss according to an embodiment; and
FIG. 13 is a schematic structural diagram of the slave pin boss according to an embodiment.

In the figures: 1-module base, 11-mounting structure, 2-rotating mechanism, 21-master pin boss, 22-slave pin boss, 221-rotation limiting groove, 222-slave mounting hole, 23-motor, 24-gear box, 25-main shaft, 26-damper, 27-mechanism housing, 271-left sleeve, 272-middle sleeve, 273-right sleeve, 2731-right-side rotating shaft, 2732-rotation limiting member, 2733-harness via, 274-mounting lug, 28-circuit board, 3-display, 31-specular reflection film, 4-module housing, 41-avoidance groove, 5-decorative panel, 6-vehicle front roof crossmember, 7-front windshield.

### DESCRIPTION OF EMBODIMENTS

The following describes implementations of the technical solutions for the present invention with reference to accompanying drawings and preferred embodiments. A person skilled in the art can easily understand other advantages and effects of the present invention based on content disclosed in this specification. The present invention may be further implemented or applied by using other different specific implementations. Various details in this specification may also be modified or changed based on different viewpoints and applications without departing from the present invention. It should be understood that the preferred embodiments are merely intended to describe the present invention, and are not intended to limit the protection scope of the present invention.

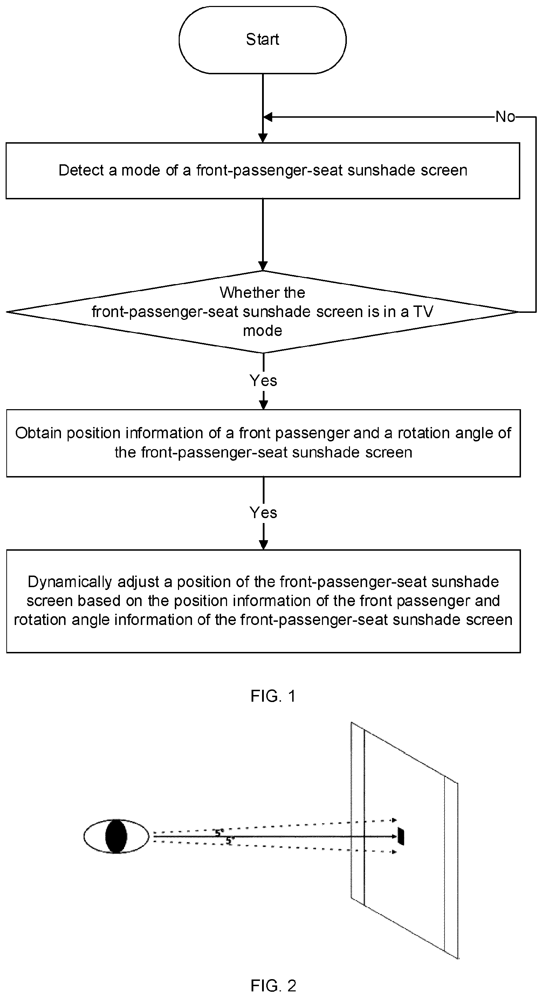

As shown in FIG. 1 and FIG. 2, in this embodiment, a human-computer interaction system for a vehicle front-passenger-seat sunshade screen includes a front-passenger-seat sunshade screen, a camera, an angle detection module, and a controller. The front-passenger-seat sunshade screen is configured to shade light and play video information, where the front-passenger-seat sunshade screen is capable of being rotatably disposed on a roof of a vehicle front-passenger-seat compartment. The camera is configured to track position information of a front passenger in real time, and transmit the position information of the front passenger to the controller. The angle detection module is configured to collect a rotation angle of the front-passenger-seat sunshade screen. The controller is configured to control the rotation angle and audio/video playback of the front-passenger-seat sunshade screen, and dynamically adjust a position of the front-passenger-seat sunshade screen based on the position information of the front passenger and the rotation angle of the front-passenger-seat sunshade screen, where the controller is separately connected to the front-passenger-seat sunshade screen, the angle detection module, and the camera.

In this embodiment, the camera is disposed at a central position of a visual region of the front-passenger-seat sunshade screen. The front-passenger-seat sunshade screen is further configured with a TV mode. The controller is further configured to: when it is detected that the front-passenger-seat sunshade screen is opened and enters the TV mode, control the camera to track eyeball position information of the front passenger in real time, to ensure accuracy of tracking the eyeball position information of the passenger. When necessary, a selfie mode of the camera may be further enabled to replace a makeup mirror function.

As shown in FIG. 2, in this embodiment, the controller is further configured to: calculate a deviation between a normal direction of a screen of the front-passenger-seat sunshade screen and a virtual connection line between an eyeball of the front passenger and the camera, and compare the deviation with a preset deviation value (for example, 5°); and if the deviation is less than or equal to the preset deviation value, maintain a current flipping angle of the front-passenger-seat sunshade screen; or if the deviation is greater than the preset deviation value, calculate a target angle position of the front-passenger-seat sunshade screen based on an eyeball position of the front passenger and rotation angle information of the front-passenger-seat sunshade screen, and control the front-passenger-seat sunshade screen to rotate to the target angle position, that is, enable a deviation between the normal direction of the screen and a virtual connection line between an eyeball of a user and the camera to be less than or equal to 5°.

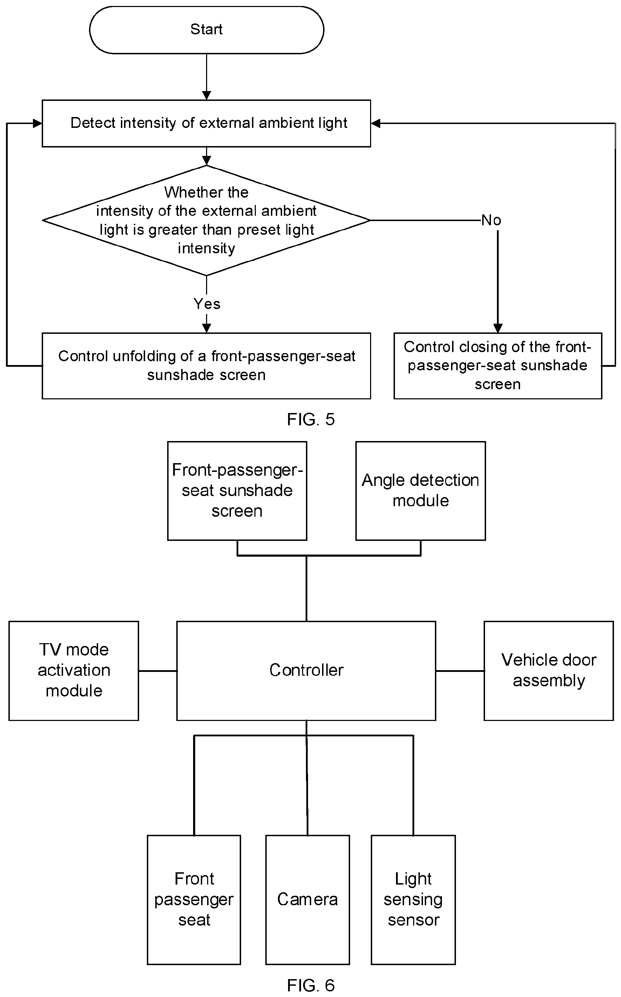

As shown in FIG. 6, in this embodiment, the human-computer interaction system for a vehicle front-passenger-seat sunshade screen further includes a light sensing sensor, configured to monitor intensity of external ambient light, where the light sensing sensor is connected to the controller. The controller is further configured to: when the front-passenger-seat sunshade screen is not in the TV mode, automatically control opening/closing of the front-passenger-seat sunshade screen based on a magnitude of the intensity of the external ambient light. When the front-passenger-seat sunshade screen is in a closed state, the front-passenger-seat sunshade screen is almost parallel to a roof of a vehicle, reducing occupation of internal space of the vehicle. When the front-passenger-seat sunshade screen is in an opened state, the front-passenger-seat sunshade screen and the roof of the vehicle form a specific included angle, implementing sun shading. A sunshade function and an audio/video display function are completed by using only one front-passenger-seat sunshade screen, implementing structural integration and function maximization. This can effectively avoid a glare problem of mirror display and reduce direct radiation of strong external light, improving user experience; and can automatically implement a sunshade function in a strong light environment, which is more user-friendly and intelligent.

As shown in FIG. 6, in this embodiment, the human-computer interaction system for a vehicle front-passenger-seat sunshade screen further includes a vehicle door assembly, configured to feed back a vehicle door status to the controller, where the vehicle door assembly is connected to the controller. The front-passenger-seat sunshade screen is further configured with a courtesy mode. The controller is further configured to: when it is detected that the front-passenger-seat sunshade screen is in an unfolded state, control the courtesy mode of the front-passenger-seat sunshade screen to be in an enabled standby state; when it is detected that a vehicle door is opened and it is identified that the front passenger has an intention to get off the vehicle or that a passenger has an intention to take a front passenger seat, activate the courtesy mode of the front-passenger-seat sunshade screen, and control the front-passenger-seat sunshade screen to move toward a front windshield side to a courtesy position; and when the front-passenger-seat sunshade screen is in the courtesy mode, in response to detecting that a front-passenger's side vehicle door is in a closed state, control the front-passenger-seat sunshade screen to move to a position before the courtesy mode is activated, exit the courtesy mode, and enter the enabled standby state of the courtesy mode, to enable the front-passenger-seat sunshade screen to have a courtesy function to prevent the front passenger from bumping into the front-passenger-seat sunshade screen when getting in or out of the vehicle.

As shown in FIG. 6, in this embodiment, the human-computer interaction system for a vehicle front-passenger-seat sunshade screen further includes a TV mode activation module, configured to send a TV mode activation instruction, where the TV mode activation module establishes a communication connection to the controller. The controller is further configured to: when it is detected that the TV mode of the front-passenger-seat sunshade screen is not activated, in response to receiving the TV mode activation instruction, control the front passenger seat to move to a seat position Ps1 memorized in the TV mode, control the front-passenger-seat sunshade screen to rotate to a front-passenger-seat sunshade screen position Pr1 memorized in the TV mode, and control the front-passenger-seat sunshade screen to enter the TV mode, where the seat position Ps1 includes a backrest angle and a position of the seat in a front-to-back direction. In other words, after the user enables a TV mode function, the vehicle automatically controls both the front passenger seat and the front-passenger-seat sunshade screen simultaneously to move, to enable the position of the front passenger seat to match an unfolding angle of the front-passenger-seat sunshade screen, so that the front passenger can rest at a comfortable position and watch the front-passenger-seat sunshade screen. Adaptation positions of the front-passenger-seat sunshade screen and the front passenger seat may be specifically set and memorized according to a user requirement. In this manner, comfort is improved for a front-passenger-seat user.

As shown in FIG. 6, in this embodiment, the TV mode activation module is a TV mode switch of the front-passenger-seat sunshade screen, and the TV mode switch of the front-passenger-seat sunshade screen establishes a communication connection to the controller. The controller is further configured to: when the TV mode of the front-passenger-seat sunshade screen is not activated, send the TV mode activation instruction in response to detecting that an activation button of the TV mode is triggered. In other words, the TV mode of the front-passenger-seat sunshade screen can be activated by triggering the TV mode switch of the front-passenger-seat sunshade screen.

As shown in FIG. 6, in this embodiment, the TV mode activation module may alternatively be a voice recognition module, and the voice recognition module establishes a communication connection to the controller. The controller is further configured to: when the TV mode of the front-passenger-seat sunshade screen is not activated, send the TV mode activation instruction in response to receiving a voice instruction that the front-passenger-seat sunshade screen enters the TV mode. In other words, the TV mode of the front-passenger-seat sunshade screen can be activated in a voice manner. For example, after the user says that "enable the TV mode", an in-vehicle infotainment system actively asks the user, through voice, "whether to enable the TV mode". If an answer of "yes" is detected, the system controls the front-passenger-seat sunshade screen to rotate to a TV mode position, to facilitate the user to watch a video. If another answer is detected, the vehicle does not perform any operation.

As shown in FIG. 6, in this embodiment, the front passenger seat includes a seat and a first control unit controlling the backrest angle and position adjustment in a front-to-back direction. The user may adjust the seat according to a preferences of the user after getting on the vehicle. The first control unit establishes a communication connection to the controller. The controller is further configured to: when the TV mode of the front-passenger-seat sunshade screen is not activated, send, in response to detecting that the front passenger seat moves to a preset angle value, information about determining whether to enable the TV mode of the front-passenger-seat sunshade screen, and send the TV mode activation instruction when information about determining to enable the TV mode of the front-passenger-seat sunshade screen is received. The TV mode of the front-passenger-seat sunshade screen can be activated by adjusting the seat.

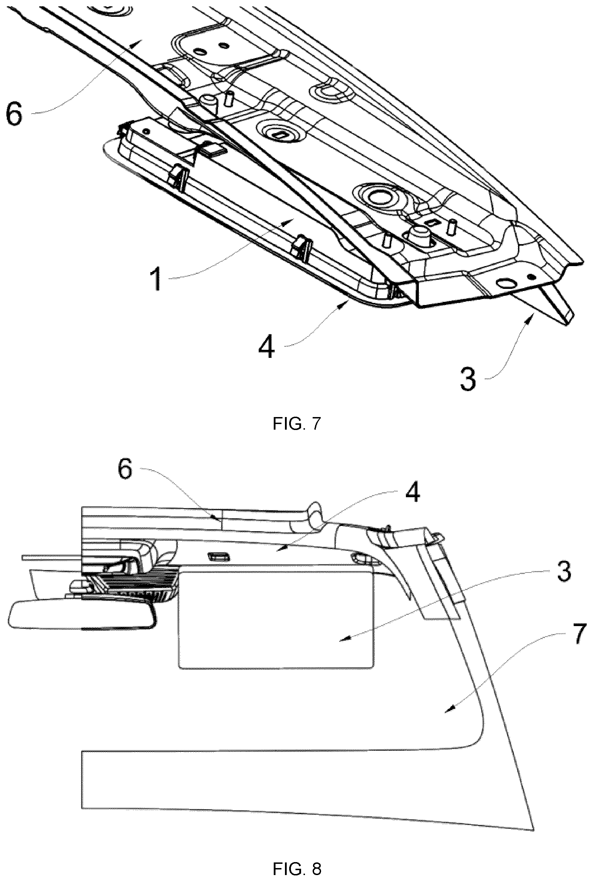

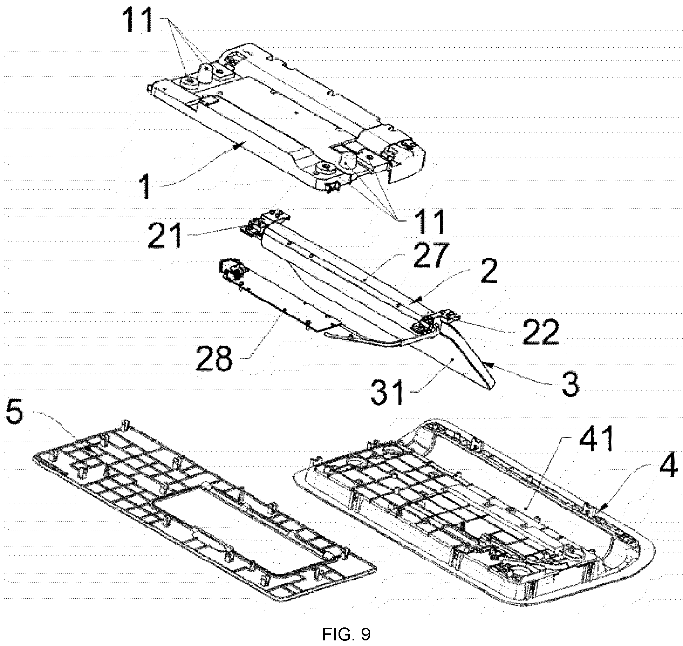

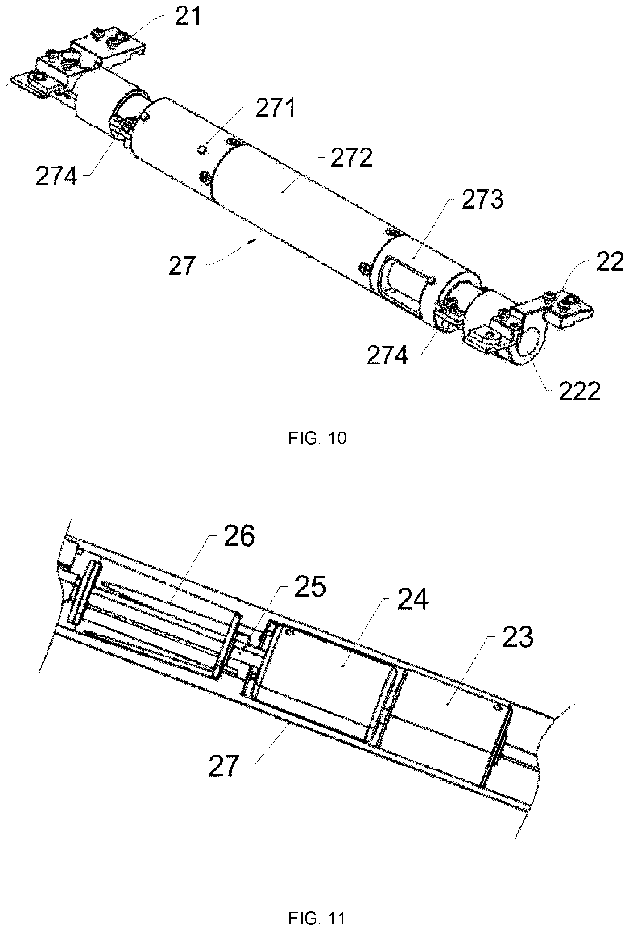

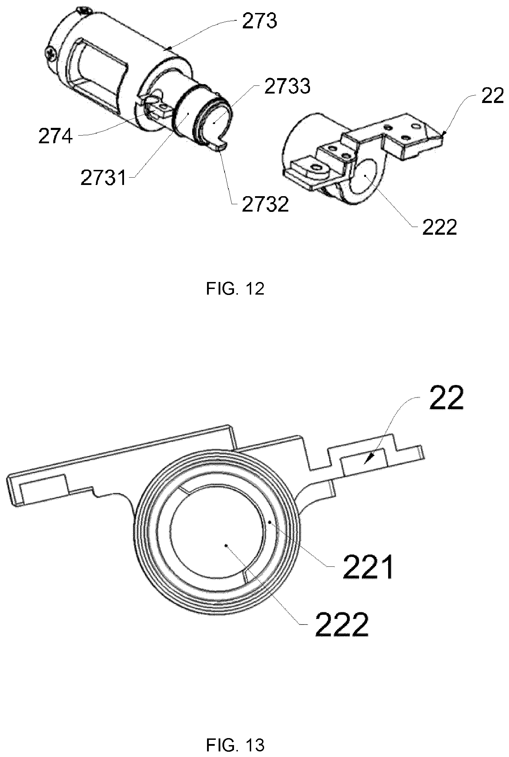

In this embodiment, as shown in FIG. 7 to FIG. 13, the front-passenger-seat sunshade screen includes a sunshade display module and a second control unit connected to the sunshade display module. The sunshade display module includes a module base 1, a rotating mechanism 2, a display 3, and a module housing 4. A mounting structure 11 configured to be connected to a vehicle front roof crossmember 6 is disposed on an upper part of the module base 1. A lower part of the module base 1 is connected to the module housing 4, and a cavity is formed between the two. The rotating mechanism 2 includes a fastening assembly, an electrically driving assembly, and a mechanism housing 27, the fastening assembly is fastened in the cavity, the electrically driving assembly is connected to the fastening assembly, and the electrically driving assembly can drive the mechanism housing 27 to rotate. An avoidance groove 41 is provided on the module housing 4 at a position corresponding to the mechanism housing 27, the mechanism housing 27 stretches out of the avoidance groove 41, and one end of the display 3 is connected to the mechanism housing 27. The mounting structure 11 includes two positioning pins and four bolt connection holes.

The module base 1 is connected to the vehicle front roof crossmember 6 by using the mounting structure 11, so that this automotive sunshade apparatus can be mounted above and in front of the front passenger seat. When the automotive sunshade apparatus is not used, the display 3 faces the module housing 4 in a horizontal posture. When the front passenger has a sunshade requirement, for example, an automobile is driving in strong sunlight, the electrically driving assembly can drive the mechanism housing 27 to rotate, and the mechanism housing 27 drives the display 3 to rotate, so that the display 3 rotates in a direction close to a front windshield 7 and hovers until rotating to an angle that can shade sunlight. In this case, sunlight radiation can be reduced and strong light can be prevented from directly shining on the front passenger, improving riding comfort for the front passenger. When the front passenger has an audio/video entertainment requirement, the electrically driving assembly can drive the mechanism housing 27 to rotate, and the mechanism housing 27 drives the display 3 to rotate, so that the display 3 rotates in the direction close to the front windshield 7 and hovers until rotating to an angle suitable for watching. In this case, the audio/video entertainment requirement of the front passenger can be met, increasing a function diversity and improving practicality of the automotive sunshade apparatus.

In this embodiment, the fastening assembly includes a master pin boss 21 and a slave pin boss 22 that are respectively disposed on two sides of left and right sides of the mechanism housing 27. The master pin boss 21 and the slave pin boss 22 are separately connected to the mechanism housing 27 in a screw connection manner.

In this embodiment, the electrically driving assembly includes a motor 23, a gear box 24, and a main shaft 25 that are sequentially drivingly connected to each other. An end of the main shaft 25 away from the gear box 24 is in a fastened connection with the master pin boss 21, and both the motor 23 and the gear box 24 are in fastened connections with an inner wall of the mechanism housing 27. An inner hollow of the mechanism housing 27 can be configured to accommodate the motor 23, the gear box 24, and a damper 26. The gear box 24 can convert a high rotational speed and low torque output by the motor 23 into a low rotational speed and high torque. When the motor 23 operates, power of the motor 23 is sequentially transmitted to the gear box 24 and the main shaft 25, so that the main shaft 25 rotates relative to the motor 23 and the gear box 24. However, after the main shaft 25 is in a fastened connection with the master pin boss 21, the main shaft 25 cannot rotate. Therefore, when the motor 23 operates, the motor 23 and the gear box 24 are enabled to rotate relative to the main shaft 25 and the master pin boss 21. Both the motor 23 and the gear box 24 are in fastened connections with the mechanism housing 27. Therefore, when the motor 23 operates, the mechanism housing 27 can be driven to rotate relative to the master pin boss 21, so that the display 3 moves relative to the master pin boss 21 and the module housing 4.

In this embodiment, the electrically driving assembly further includes the damper 26, and the damper 26 is configured to increase a friction force when the mechanism housing 27 and the main shaft 25 rotate relative to each other. Increasing the friction force when the mechanism housing 27 and the main shaft 25 rotate relative to each other can enable the mechanism housing 27 to stably rotate.

In this embodiment, the mechanism housing 27 includes a left sleeve 271, a middle sleeve 272, and a right sleeve 273 that are sequentially connected. A left-side rotating shaft is disposed on a left end of the left sleeve 271, a master mounting hole is provided on the master pin boss 21, and the left-side rotating shaft can be connected to the master mounting hole in a rotatable manner. A right-side rotating shaft 2731 is disposed on a right end of the right sleeve 273, a slave mounting hole 222 is provided on the slave pin boss 22, and the right-side rotating shaft 2731 can be connected to the slave mounting hole 222 in a rotatable manner. This structure arrangement can ensure that the mechanism housing 27 can rotate relative to the fastening assembly.

In this embodiment, a rotation limiting member 2732 is disposed on the right-side rotating shaft 2731, and a rotation limiting groove 221 configured to cooperate with the rotation limiting member 2732 is disposed in the slave pin boss 22. The rotation limiting member 2732 is inserted into the rotation limiting groove 221, so that a rotation angle of right-side rotating can be limited. In a process in which the rotation limiting member 2732 rotates from a position abutting against a head end of the rotation limiting groove 221 to a position abutting against a tail end of the rotation limiting groove 221, the right-side rotating shaft 2731 rotates by 170°.

In this embodiment, mounting lugs 274 configured to be connected to the display 3 are disposed on both the left sleeve 271 and the right sleeve 273. After being connected to the two mounting lugs 274, the display 3 can rotate synchronously with the left sleeve 271 and the right sleeve 273.

In this embodiment, the electrically driving assembly further includes a circuit board 28 disposed in the cavity, and the circuit board 28 is connected to the module housing 4. A harness via 2733 is provided inside the right-side rotating shaft 2731, and a harness of the circuit board 28 passes through the slave mounting hole 222 and the harness via 2733, and is connected to the motor 23.

In this embodiment, a decorative panel 5 disposed in the cavity is further included, and the decorative panel 5 is connected to the module base 1. The decorative panel 5 may be configured to block a bolt used at a joint between the module base 1 and the vehicle front roof crossmember 6.

In this embodiment, a specular reflection film 31 is disposed on the display 3. When the display 3 is in a screen-on state, the specular reflection film 31 can normally transmit light, which does not affect watching by the front passenger. When the front passenger has a makeup mirror requirement, the electrically driving assembly can drive the mechanism housing 27 to rotate, and the mechanism housing 27 drives the display 3 to rotate, so that the display 3 rotates in the direction close to the front windshield 7 and hovers until rotating to an angle facing the front passenger, and the display 3 is in a screen-off state. In this case, the display 3 with the specular reflection film 31 can serve as a makeup mirror to meet the makeup mirror requirement of the front passenger.

As shown in FIG. 6, in this embodiment, the angle detection module uses an angle sensor, and the angle sensor is disposed at a rotating shaft position of a rotating mechanism of the front-passenger-seat sunshade screen, to precisely record a real-time rotation angle of the front-passenger-seat sunshade screen, and send angle information back to the controller in real time.

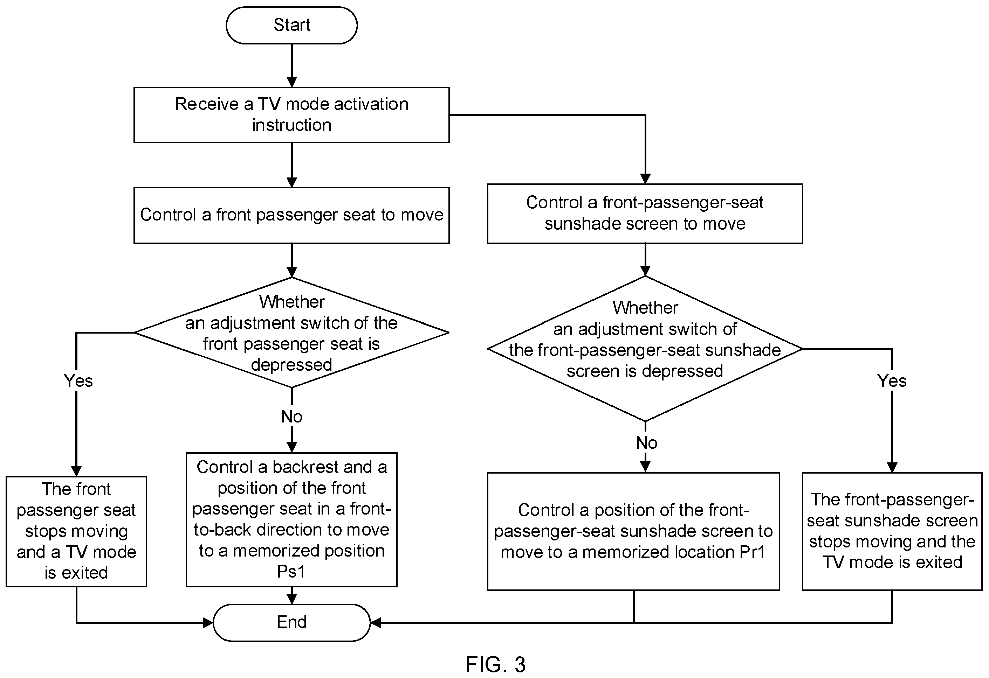

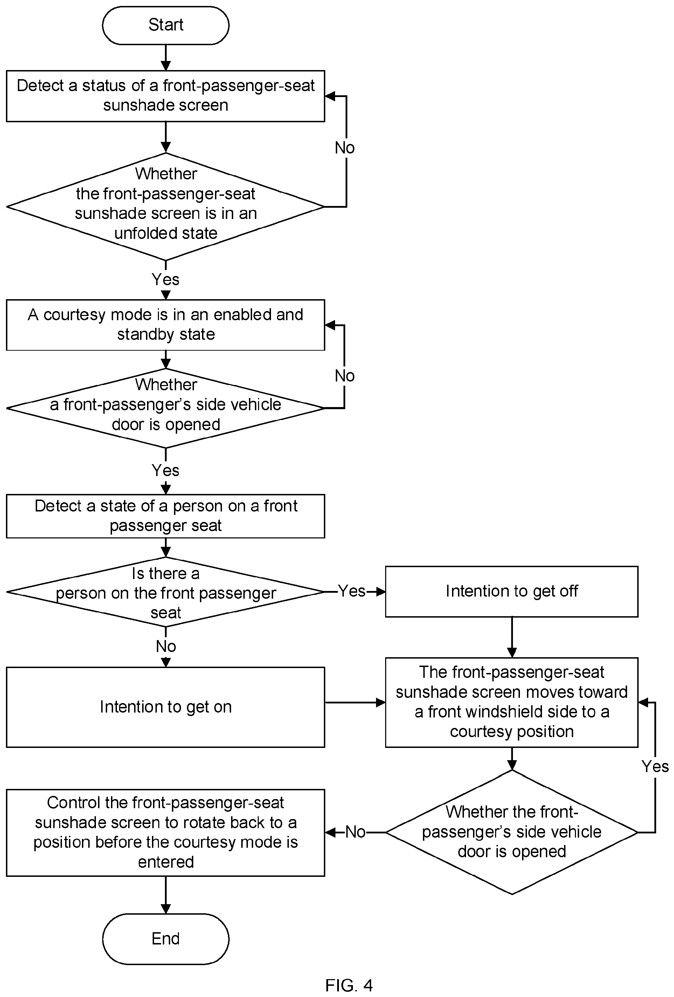

As shown in FIG. 1, FIG. 3, FIG. 4, and FIG. 5, in this embodiment, a human-computer interaction method for a vehicle front-passenger-seat sunshade screen uses the human-computer interaction system for a vehicle front-passenger-seat sunshade screen described in this embodiment. The method includes the following steps:
(1) When it is detected that a TV mode of a front-passenger-seat sunshade screen is not activated, in response to receiving a TV mode activation instruction, a front passenger seat is controlled to move to a seat position Ps1 memorized in the TV mode, the front-passenger-seat sunshade screen is controlled to rotate to a front-passenger-seat sunshade screen position Pr1 memorized in the TV mode, and the front-passenger-seat sunshade screen is controlled to enter the TV mode, where the seat position Ps1 includes a backrest angle and a position of the seat in a front-to-back direction. Before the front-passenger-seat sunshade screen rotates to the front-passenger-seat sunshade screen position Pr1 memorized in the TV mode, if it is detected that the front-passenger-seat sunshade screen stops moving (for example, an adjustment switch of the front-passenger-seat sunshade screen is depressed and the front-passenger-seat sunshade screen stops moving), it indicates that entering the TV mode is abnormal. In this case, the TV mode of the front-passenger-seat sunshade screen is exited. Before the front passenger seat moves to the seat position Ps1 memorized in the TV mode, if it is detected that the front passenger seat stops moving (for example, it is detected that an adjustment switch of the front passenger seat is depressed and the front passenger seat stops moving), it indicates that entering the TV mode is abnormal. In this case, the TV mode of the front-passenger-seat sunshade screen is exited.
(2) When the front-passenger-seat sunshade screen is in the TV mode, position information of a front passenger (for example, eyeball information of the front passenger) and a rotation angle of the front-passenger-seat sunshade screen are obtained; and a position of the front-passenger-seat sunshade screen is dynamically adjusted based on eyeball position information and rotation angle information of the front-passenger-seat sunshade screen.
(3) When the front-passenger-seat sunshade screen is not in the TV mode, intensity of external ambient light is monitored, and opening/closing of the front-passenger-seat sunshade screen is automatically controlled based on a magnitude of the intensity of the external ambient light.
(4) When it is detected that the front-passenger-seat sunshade screen is in an unfolded state (for example, in the TV mode or in a sunshade mode), a courtesy mode of the front-passenger-seat sunshade screen is controlled to be in an enabled standby state; when it is detected that a vehicle door is opened and it is identified that the front passenger has an intention to get off a vehicle or that a passenger has an intention to take the front passenger seat, the courtesy mode of the front-passenger-seat sunshade screen is activated, and the front-passenger-seat sunshade screen is controlled to move toward a front windshield side to a courtesy position; and when the front-passenger-seat sunshade screen is in the courtesy mode, in response to detecting that a front-passenger's side vehicle door is in a closed state, the front-passenger-seat sunshade screen is controlled to move to a position before the courtesy mode is activated, the courtesy mode is exited, and the enabled standby state of the courtesy mode is entered. controlled to move toward a front windshield side to a courtesy position; and when the front-passenger-seat sunshade screen is in the courtesy mode, in response to detecting that a front-passenger's side vehicle door is in a closed state, the front-passenger-seat sunshade screen is controlled to move to a position before the courtesy mode is activated, the courtesy mode is exited, and the enabled standby state of the courtesy mode is entered.

In this embodiment, a vehicle uses the human-computer interaction system for a vehicle front-passenger-seat sunshade screen described in this embodiment. The foregoing embodiments are preferred implementations of the present invention. However, the implementations of the present invention are not limited to the foregoing embodiments. Any other change, modification, substitution, combination, and simplification without departing from the principle of the present invention shall be equivalent replacement manners, and shall fall within the protection scope of the present invention.

## Claims

1. A human-computer interaction system for a vehicle front-passenger-seat sunshade screen, comprising:
a front-passenger-seat sunshade screen, configured to shade light and display video information, wherein the front-passenger-seat sunshade screen is configured to be rotatably disposed on a roof of a vehicle compartment above and in front of a front-passenger-seat;
a camera, configured to track position information of a front passenger in real time;
an angle detection module, configured to collect a rotation angle of the front-passenger-seat sunshade screen; and
a controller, configured to control the rotation angle and audio/video playback of the front-passenger-seat sunshade screen, wherein the controller is separately connected to the front-passenger-seat sunshade screen, the angle detection module, and the camera;
**characterized in that**
the camera is disposed at a central position of a visual region of the front-passenger-seat sunshade screen;
the front-passenger-seat sunshade screen is further configured with a TV mode; and
the controller is further configured
to obtain position information of a front passenger based on information provided by the camera and to obtain a rotation angle of a front-passenger-seat sunshade screen based on information provided by the angle detection module;
to control the camera to track eyeball position information of the front passenger in real time when it is detected that the front-passenger-seat sunshade screen is opened and enters the TV mode;
to calculate a deviation between a normal direction of a screen of the front-passenger-seat sunshade screen and a virtual connection line between an eyeball of the front passenger and the camera;
to calculate a target angle position of the front-passenger-seat sunshade screen based on an eyeball position of the front passenger and rotation angle information of the front-passenger-seat sunshade screen when it is determined that the deviation is greater than a preset deviation value;
to dynamically adjust a position of the front-passenger-seat sunshade screen based on the position information of the front passenger and the rotation angle of the front-passenger-seat sunshade screen; and
to control the front-passenger-seat sunshade screen to rotate to the target angle position.

2. A human-computer interaction method for a vehicle front-passenger-seat sunshade screen, wherein the method uses the human-computer interaction system for a vehicle front-passenger-seat sunshade screen according to claim 1, and comprises the following steps:
obtaining position information of a front passenger based on information provided by the camera;
obtaining a rotation angle of a front-passenger-seat sunshade screen based on information provided by the angle detection module
controlling the camera to track eyeball position information of the front passenger in real time when it is detected that the front-passenger-seat sunshade screen is opened and enters the TV mode;
calculating a deviation between a normal direction of a screen of the front-passenger-seat sunshade screen and a virtual connection line between an eyeball of the front passenger and the camera;
calculating a target angle position of the front-passenger-seat sunshade screen based on an eyeball position of the front passenger and rotation angle information of the front-passenger-seat sunshade screen when it is determined that the deviation is greater than a preset deviation value;
dynamically adjusting a position of the front-passenger-seat sunshade screen based on the position information of the front passenger and the rotation angle of the front-passenger-seat sunshade screen; and
controlling the front-passenger-seat sunshade screen to rotate to the target angle position.

3. A vehicle, comprising the human-computer interaction system for a vehicle front-passenger-seat sunshade screen according to claim 1.

## Patentansprüche

1. Mensch-Computer-Interaktionssystem für einen beifahrerseitigen Sonnenblendenbildschirm eines Fahrzeugs, umfassend:
einen beifahrerseitigen Sonnenblendenbildschirm, der dazu eingerichtet ist, Licht abzuschirmen und Videoinformationen anzuzeigen, wobei der beifahrerseitige Sonnenblendenbildschirm dazu eingerichtet ist, drehbar an einem Dach eines Fahrzeuginnenraums oberhalb und vor einem Beifahrersitz angeordnet zu sein;
eine Kamera, die dazu eingerichtet ist, Positionsinformationen eines Beifahrers in Echtzeit nachzuverfolgen;
ein Winkelerfassungsmodul, das dazu eingerichtet ist, einen Drehwinkel des beifahrerseitigen Sonnenblendenbildschirms zu erfassen; und
eine Steuereinrichtung, die dazu eingerichtet ist, den Drehwinkel und eine Audio-/Videowiedergabe des beifahrerseitigen Sonnenblendenbildschirms zu steuern, wobei die Steuereinrichtung jeweils mit dem beifahrerseitigen Sonnenblendenbildschirm, dem Winkelerfassungsmodul und der Kamera verbunden ist;
**dadurch gekennzeichnet, dass**
die Kamera an einer zentralen Position eines Sichtbereichs des beifahrerseitigen Sonnenblendenbildschirms angeordnet ist;
der beifahrerseitige Sonnenblendenbildschirm ferner mit einem TV-Modus versehen ist; und
die Steuereinrichtung ferner dazu eingerichtet ist, um
auf Grundlage der von der Kamera bereitgestellten Informationen Positionsinformationen eines Beifahrers zu erhalten und auf Grundlage der von dem Winkelerfassungsmodul bereitgestellten Informationen einen Drehwinkel des beifahrerseitigen Sonnenblendenbildschirms zu erhalten;
die Kamera so zu steuern, dass sie Positionsinformationen eines Augapfels des Beifahrers in Echtzeit nachverfolgt, wenn festgestellt wird, dass der beifahrerseitige Sonnenblendenbildschirm geöffnet wird und in den TV-Modus wechselt;
eine Abweichung zwischen einer Normalenrichtung eines Bildschirms des beifahrerseitigen Sonnenblendenbildschirms und einer virtuellen Verbindungslinie zwischen einem Auge des Beifahrers und der Kamera zu berechnen;
eine Zielwinkelposition des beifahrerseitigen Sonnenblendenbildschirms auf Grundlage einer Position des Auges des Beifahrers und der Drehwinkelinformationen des beifahrerseitigen Sonnenblendenbildschirms zu berechnen, wenn festgestellt wird, dass die Abweichung größer als ein voreingestellter Abweichungswert ist;
eine Position des beifahrerseitigen Sonnenblendenbildschirms auf Grundlage der Positionsinformationen des Beifahrers und des Drehwinkels des beifahrerseitigen Sonnenblendenbildschirms dynamisch anzupassen; und
den beifahrerseitigen Sonnenblendenbildschirm so zu steuern, dass er sich in die Zielwinkelposition dreht.

2. Mensch-Computer-Interaktionsverfahren für einen beifahrerseitigen Sonnenblendenbildschirm eines Fahrzeugs, wobei das Mensch-Computer-Interaktionssystem für einen beifahrerseitigen Sonnenblendenbildschirm eines Fahrzeugs nach Anspruch 1 verwendet wird und das Verfahren die folgenden Schritte umfasst:
Erhalten von Positionsinformationen eines Beifahrers auf Grundlage der von der Kamera bereitgestellten Informationen;
Erhalten eines Drehwinkels eines beifahrerseitigen Sonnenblendenbildschirms auf Grundlage der von dem Winkelerfassungsmodul bereitgestellten Informationen;
Steuern der Kamera derart, dass sie Positionsinformationen eines Auges des Beifahrers in Echtzeit nachverfolgt, wenn festgestellt wird, dass der beifahrerseitige Sonnenblendenbildschirm geöffnet wird und in den TV-Modus wechselt;
Berechnen einer Abweichung zwischen einer Normalenrichtung eines Bildschirms des beifahrerseitigen Sonnenblendenbildschirms und einer virtuellen Verbindungslinie zwischen einem Auge des Beifahrers und der Kamera;
Berechnen einer Zielwinkelposition des beifahrerseitigen Sonnenblendenbildschirms auf Grundlage einer Position des Auges des Beifahrers und der Drehwinkelinformationen des beifahrerseitigen Sonnenblendenbildschirms, wenn festgestellt wird, dass die Abweichung größer als ein voreingestellter Abweichungswert ist;
dynamisches Anpassen einer Position des beifahrerseitigen Sonnenblendenbildschirms auf Grundlage der Positionsinformationen des Beifahrers und des Drehwinkels des beifahrerseitigen Sonnenblendenbildschirms;
und Steuern des beifahrerseitigen Sonnenblendenbildschirms derart, dass er sich in die Zielwinkelposition dreht.

3. Fahrzeug, umfassend das Mensch-Computer-Interaktionssystem für einen beifahrerseitigen Sonnenblendenbildschirm eines Fahrzeugs nach Anspruch 1.

## Revendications

1. Un système d'interaction homme-machine destiné à un écran pare-soleil du siège passager avant d'un véhicule, comprenant :
un écran pare-soleil du siège passager avant, configuré pour faire de l'ombre et afficher des informations vidéo, dans lequel l'écran pare-soleil du siège passager avant est configuré pour être disposé de manière rotative sur le toit de l'habitacle d'un véhicule, au-dessus et à l'avant du siège passager avant ;
une caméra, configurée pour suivre en temps réel les informations de position d'un passager avant ;
un module de détection d'angle, configuré pour détecter l'angle de rotation de l'écran pare-soleil du siège passager avant ; et
un contrôleur, configuré pour contrôler l'angle de rotation et la lecture audio/vidéo de l'écran pare-soleil du siège passager avant, le contrôleur étant connecté séparément à l'écran pare-soleil du siège passager avant, au module de détection d'angle et à la caméra ;
**caractérisé en ce que :**
la caméra est disposée en position centrale dans la zone de vision de l'écran pare-soleil du siège passager avant ;
l'écran pare-soleil du siège passager avant est en outre configuré avec un mode TV ; et
le contrôleur est en outre configuré
pour obtenir des informations de position d'un passager avant sur la base des informations fournies par la caméra et pour obtenir un angle de rotation de l'écran pare-soleil du siège passager avant sur la base des informations fournies par le module de détection d'angle ;
à commander la caméra pour qu'elle suive en temps réel les informations de position du globe oculaire du passager avant lorsqu'il est détecté que le pare-soleil du siège passager avant est ouvert et passe en mode TV ;
à calculer un écart entre une direction normale d'un écran du pare-soleil du siège passager avant et une ligne de connexion virtuelle entre le globe oculaire du passager avant et la caméra ;
calculer une position angulaire cible du pare-soleil du siège passager avant en fonction de la position du globe oculaire du passager avant et des informations d'angle de rotation du pare-soleil du siège passager avant lorsqu'il est déterminé que l'écart est supérieur à une valeur d'écart prédéfinie ;
ajuster dynamiquement la position de l'écran pare-soleil du siège passager avant en fonction des informations de position du passager avant et de l'angle de rotation de l'écran pare-soleil du siège passager avant ; et
commander la rotation de l'écran pare-soleil du siège passager avant vers la position angulaire cible.

2. Une procédé d'interaction homme-machine pour un écran pare-soleil du siège passager avant d'un véhicule, dans lequel le procédé utilise le système d'interaction homme-machine pour un écran pare-soleil du siège passager avant d'un véhicule selon la revendication 1, et comprend les étapes suivantes :
obtenir des informations de position d'un passager avant en fonction des informations fournies par la caméra ;
obtenir un angle de rotation d'un écran pare-soleil du siège passager avant en fonction des informations fournies par le module de détection d'angle ;
commander la caméra pour qu'elle suive en temps réel les informations de position du globe oculaire du passager avant lorsqu'il est détecté que le pare-soleil du siège passager avant est ouvert et passe en mode télévision ;
calculer un écart entre la direction normale d'un écran du pare-soleil du siège passager avant et une ligne de connexion virtuelle entre le globe oculaire du passager avant et la caméra ;
calculer une position angulaire cible du pare-soleil du siège passager avant en fonction de la position du globe oculaire du passager avant et des informations d'angle de rotation du pare-soleil du siège passager avant lorsqu'il est déterminé que l'écart est supérieur à une valeur d'écart prédéfinie ;
ajuster dynamiquement la position du pare-soleil du siège passager avant en fonction des informations de position du passager avant et de l'angle de rotation du pare-soleil du siège passager avant ; et
commander la rotation du pare-soleil du siège passager avant vers la position angulaire cible.

3. Un véhicule comprenant le système d'interaction homme-machine pour le pare-soleil du siège passager avant d'un véhicule selon la revendication 1.
